# EUROPEAN PATENT SPECIFICATION

(11) **EP 2 800 185 B1**
(45) Date of publication and mention of the grant of the patent: **01.08.2018**
(21) Application number: 12862937.5
(22) Date of filing: 28.12.2012
(51) Int. Cl.: H01M 8/04, H01M 8/10, H01M 8/06, H01M 8/0612, H01M 8/0606, H01M 8/04955, H01M 8/04828, H01M 8/04858, H01M 8/04791, H01M 8/04664, H01M 8/04537, H01M 8/0444, H01M 8/04223, H01M 8/04089, H01M 8/1018

(54) **FUEL CELL SYSTEM AND METHOD FOR OPERATING SAME**
BRENNSTOFFZELLENSYSTEM UND BETRIEBSVERFAHREN DAFÜR
SYSTÈME DE PILE À COMBUSTIBLE ET PROCÉDÉ DE FONCTIONNEMENT DE CELLE-CI

(30) Priority: 28.12.2011 JP 2011288443
(43) Date of publication of application: 05.11.2014
(73) Proprietor: Panasonic Corporation, Kadoma-shi, Osaka 571-8501 (JP)
(72) Inventor: TANAKA, Yoshikazu, Osaka 540-6207 (JP); NAKAMURA, Akinari, Osaka 540-6207 (JP); URATA, Takayuki, Osaka 540-6207 (JP)
(74) Representative: Grünecker Patent- und Rechtsanwälte PartG mbB
(86) International application number: PCT/JP2012/008441
(87) International publication number: WO 2013/099287

(56) References cited:
- EP-A1- 2 237 351
- EP-A1- 2 306 573
- JP-A- H06 243 882
- JP-A- H10 284 102
- JP-A- 2000 021 429
- JP-A- 2004 165 058
- JP-A- 2004 265 683
- JP-A- 2004 265 683
- JP-A- 2004 311 333
- JP-A- 2006 004 717
- JP-A- 2008 103 198

## Description

### Technical Field

The present invention relates to a fuel cell system and an operation method thereof. Particularly, the present invention relates to a fuel cell system and an operation method thereof, which generate a reducing gas containing hydrogen from a raw material gas and generate electric power through an electrochemical reaction between the reducing gas and an oxidizing gas, and are for use in, for example, a home fuel cell cogeneration system.

### Background Art

Conventionally, there is known a fuel cell system which prevents a problem associated with a fuel cell when the electric power output of the fuel cell changes. For example, in a fuel cell power generation apparatus disclosed in Patent Literature 1, a fuel processor generates a hydrogen-rich fuel gas from a hydrocarbon-based fuel through a reforming reaction. In a fuel cell stack including a plurality of unit cells which are stacked together, electric power is generated through a chemical reaction between the fuel gas and air and a voltage detector provided in each unit cell detects a measurement voltage corresponding to each unit cell.

A controller executes a power load follower-up operation in which the electric power supplied from the fuel cell power generation apparatus to an external load is changed in response to a change in the electric power demand amount of the external load. In this case, the controller changes the electric power output of the fuel cell stack by adjusting the fuel gas and the air in amount, which are supplied to the fuel cell stack, according to a change in the electric power. If the electric power output increases rapidly, the supply amount of the fuel gas or the like does not increase in response to this increase, so that gases become insufficient in the fuel cell stack. To avoid this, when the measurement voltage corresponding to each unit cell drops to a specified voltage, the controller stops the operation of the fuel cell power generation apparatus.

### Citation List

### Patent Literature

Patent Literature 1: Japanese-Laid Open Patent Application Publication No. Hei. 6-243882

### Summary of Invention

### Technical Problem

In the above described fuel cell power generation apparatus, the problem associated with the fuel cell stack which is caused by the insufficiency of the gases, can be prevented. The supply amount of the fuel gas cannot temporarily follow up the rapid change in the electric power output and the measurement voltage temporarily drops. However, in some cases, the fuel gas with a required amount is soon supplied to the fuel cell stack, and the measurement voltage is restored. In such cases, if the fuel cell power generation apparatus is shut-down as soon as when the measurement voltage corresponding to each unit cell drops to the specified voltage, the shut-down and start-up of the fuel cell power generation apparatus are repeated unnecessarily.

In other cases, the fuel cell power generation apparatus is incapable of addressing a rapid change in the electric power output due to a degradation which progresses over years, a use condition, etc.. In such cases, if the electric power output is rapidly changed when the fuel cell power generation apparatus is re-started up after the shut-down, a phenomenon which is similar to that before the shut-down occurs, so that fuel cell power generation apparatus is shut-down. Therefore, the shut-down and start-up of the fuel cell power generation apparatus are repeated unnecessarily.

The present invention is directed to solving the above described problem, and an object of the present invention is to provide a fuel cell system and an operation method thereof, which can reduce unnecessary repetition of shut-down and start-up of the fuel cell, while preventing a problem associated with a change in the electric power output of a fuel cell.

### Solution to Problem

According to the present invention, there is provided a fuel cell system comprising: a supply unit for supplying an oxidizing gas; a hydrogen generator for generating a reducing gas containing hydrogen from a raw material gas; a fuel cell for generating electric power through an electrochemical reaction between the reducing gas and the oxidizing gas; a voltage meter for measuring a voltage of the fuel cell; and a controller for controlling devices; wherein when the voltage measured by the voltage meter decreases to a first predetermined value by changing an electric power output of the fuel cell at a predetermined change rate, the controller is configured to stop power generation in the fuel cell, and set the change rate of the electric power output lower than the predetermined change rate, when the electric power output is changed during an operation of the power generation resumed after the power generation in the fuel cell is stopped.

### Advantageous Effects of Invention

The present invention has the above described configuration, and has advantages that it is possible to provide a fuel cell system and an operation method thereof, which can reduce unnecessary repletion of shut-down and start-up of a fuel cell while preventing a problem associated with a change in an electric power output of the fuel cell.

The above and further objects, features and advantages of the invention will more fully be apparent from the following detailed description with accompanying drawings.

### Brief Description of Drawings

[Fig. 1] Fig. 1 is a block diagram showing a fuel cell system according to Embodiment 1 of the present invention.
[Fig. 2] Fig. 2 is a graph schematically showing electric power and a voltage which change with time, in the fuel cell system of Fig. 1.
[Fig. 3] Fig. 3 is a flowchart showing an exemplary operation of the fuel cell system of Fig. 1.
[Fig. 4] Fig. 4 is a flowchart showing an exemplary operation of a fuel cell system according to modified example 1.
[Fig. 5] Fig. 5 is a graph schematically showing electric power and a voltage which change with time, in a fuel cell system according to modified example 2.
[Fig. 6] Fig. 6 is a flowchart showing an exemplary operation of the fuel cell system according to modified example 2.
[Fig. 7] Fig. 7 is a block diagram showing a fuel cell system according to Embodiment 2 of the present invention.
[Fig. 8] Fig. 8 is a flowchart showing an exemplary operation of the fuel cell system of Fig. 5.
[Fig. 9] Fig. 9 is a flowchart showing an exemplary operation of a fuel cell system according to modified example 3.
[Fig. 10] Fig. 10 is a flowchart showing an exemplary operation of a fuel cell system according to modified example 4.
[Fig. 11] Fig. 11 is a flowchart showing an exemplary operation of a fuel cell system according to modified example 5.

### Description of Embodiments

According to the present invention, there is provided a fuel cell system a supply unit for supplying an oxidizing gas; a hydrogen generator for generating a reducing gas containing hydrogen from a raw material gas; a fuel cell for generating electric power through an electrochemical reaction between the reducing gas and the oxidizing gas;a voltage meter for measuring a voltage of the fuel cell; and a controller for controlling devices;wherein when the voltage measured by the voltage meter decreases to a first predetermined value by changing an electric power output of the fuel cell at a predetermined change rate, the controller is configured to stop power generation in the fuel cell, and set the change rate of the electric power output lower than the predetermined change rate, when the electric power output is changed during an operation of the power generation resumed after the power generation in the fuel cell is stopped.

According to the present invention, there is also provided a method of operating a fuel cell system including: a supply unit for supplying an oxidizing gas; a hydrogen generator for generating a reducing gas containing hydrogen from a raw material gas; fuel cell for generating electric power through an electrochemical reaction between the reducing gas and the oxidizing gas; a voltage meter for measuring a voltage of the fuel cell; and a controller for controlling devices; the method comprising: when the voltage measured by the voltage meter decreases to a first predetermined value by changing an electric power output of the fuel cell at a predetermined change rate, stopping power generation in the fuel cell, and setting the change rate of the electric power output lower than the predetermined change rate, when the electric power output is changed during an operation of the power generation resumed after the power generation in the fuel cell is stopped.

Hereinafter, embodiments of the present invention will be described with reference to the drawings.

Throughout the drawings, the same or corresponding components will be hereinafter identified by the same reference symbols and will not be described in repetition.

### (Embodiment 1)

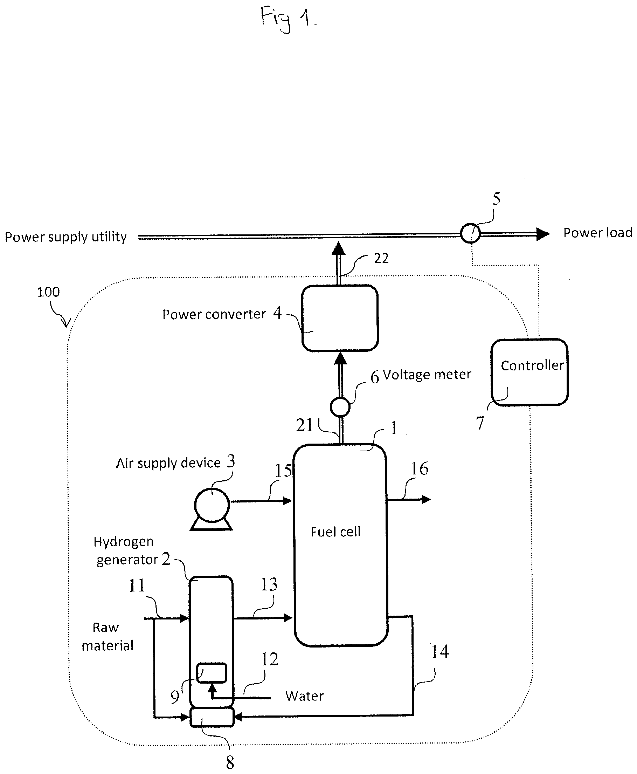

Fig. 1 is a block diagram showing a fuel cell system 100 according to Embodiment 1. As shown in Fig. 1, the fuel cell system 100 is connected to a power supply utility and a power load via a wire such as an AC power path 22. The fuel cell system 100 includes a fuel cell 1 and interactively operates with the power supply utility to supply the electric power generated in the fuel cell 1 to the power load. This power load is a device which consumes the electric power, such as home electric appliance.

The fuel cell 1 is a device which generates the electric power and heat through an electrochemical reaction between a reducing gas and an oxidizing gas. As the fuel cell 1, a polymer electrolyte fuel cell, a phosphorous-acid fuel cell, or a solid-oxide fuel cell is used. Hereinafter, the polymer electrolyte fuel cell will be described. The fuel cell 1 includes a stack including a plurality of cells which are stacked together. Each cell includes a polymer electrolyte membrane, and a pair of electrodes sandwiching the polymer electrolyte membrane therebetween. The polymer electrolyte membrane permits hydrogen ions to selectively permeate and migrate between the pair of electrodes via the water contained therein. Each of an anode and a cathode constituting the pair of electrodes includes, for example, a catalyst layer and a gas diffusion layer. The catalyst layer is a porous layer containing as a major component a carbon powder carrying a platinum-based metal catalyst, and is placed on the polymer electrolyte membrane. The gas diffusion layer is a porous layer having a gas permeability and an electron conductivity and is placed on the catalyst layer.

As supply paths of the gases required for the electrochemical reaction in the fuel cell 1, a reducing gas supply path 13 is connected to the anode, and an oxidizing gas supply path 15 is connected to the cathode. As discharge paths of gases which are not required for the electrochemical reaction in the fuel cell 1, a reducing gas discharge path 14 is connected to the anode, and an oxidizing gas discharge path 16 is connected to the cathode. In addition, as a supply path of the electric power generated in the fuel cell 1, a DC power path 21 is connected to the stack of the fuel cell 1.

The downstream end of the reducing gas supply path 13 is connected to the anode of the fuel cell 1, while the upstream end of the reducing gas supply path 13 is connected to a hydrogen generator 2. The hydrogen generator 2 is a device which generates the reducing gas through a reforming reaction between a steam of added reforming water and a hydrocarbon-based raw material. The reducing gas contains a plenty of hydrogen required for the power generation in the fuel cell 1 and is supplied to the anode of the fuel cell 1 via the reducing gas supply path 13. The hydrogen generator 2 includes, for example, a reactor (not shown) including a reforming catalyst which facilitates the reforming reaction, a heater 8 including a burner (not shown) for heating the reactor and an electric heater (not shown) and having a temperature adjustment function, and a steam generator 9 which supplies the steam required for the reforming reaction. Note that the configuration of the hydrogen generator 2 is not limited to this, so long as it generates hydrogen. The heater 8 and the steam generator 9 may be incorporated into the hydrogen generator 2 or may be provided separately from the hydrogen generator 2. In a case where the hydrogen generator 2 generates the reducing gas without using the steam, the steam generator 9 may be omitted from the hydrogen generator 2.

The downstream end of a reforming water supply path 12 is connected to the steam generator 9 of the hydrogen generator 2. The upstream end of the reforming water supply path 12 is connected to a pure water source (not shown). As pure water, for example, recovered water within the fuel cell system 100, ion exchange water which has been subjected to an ion exchange treatment and is supplied from outside the system, distilled water which has been subjected to a distillation treatment, etc., are used. It is sufficient that this pure water has a degree of purity which is required in the steam generator 9 and the reactor of the hydrogen generator 2. A raw material gas supply path 11 is connected to the reactor of the hydrogen generator 2.

The downstream end of the raw material gas supply path 11 is connected to the hydrogen generator 2, while the upstream end of the raw material gas supply path 11 is connected to a raw material supply source (not shown). The raw material supply source is an infrastructure of a natural gas (city gas), a tank of LPG, etc.. The hydrocarbon-based raw material can be generated into a hydrogen-containing gas through the steam reforming reaction. As the hydrocarbon-based raw material, a natural gas or a city gas containing methane as a major component, LPG containing butane or propane as a major component, coal oil, alcohol such as methanol, or dimethyl ether (DME) is used.

The downstream end of the oxidizing gas supply path 15 is connected to the cathode of the fuel cell 1, while the upstream end of the oxidizing gas supply path 15 is connected to an air supply device 3. As the air supply device 3, for example, a centrifugal pump, a reciprocating pump, a scroll pump, etc., is used. In this case, the air is used as the oxidizing gas. Or, oxygen may be used as the oxidizing gas. The air is supplied from the air supply device 3 to the cathode of the fuel cell 1 via the oxidizing gas supply path 15.

The upstream end of the reducing gas discharge path 14 is connected to the anode of the fuel cell 1, while the downstream end of the reducing gas discharge path 14 is connected to the heater 8 of the hydrogen generator 2. The reducing gas which has not been consumed in the electrochemical reaction in the fuel cell 1, or the hydrocarbon-based raw material which has not been reformed in the hydrogen generator 2 is supplied as fuel for combustion from the anode to the heater 8 through the reducing gas discharge path 14. The heater 8 combusts the fuel for combustion and supplies heat resulting from the combustion to the reactor of the hydrogen generator 2 or the steam generator 9.

The upstream end of the oxidizing gas discharge path 16 is connected to the cathode of the fuel cell 1, while the downstream end of the oxidizing gas discharge path 16 opens in atmosphere. Through the oxidizing gas discharge path 16, the air which has not been consumed in the electrochemical reaction in the fuel cell 1 is released to atmosphere.

One end of the DC power path 21 is connected to the fuel cell 1, while the other end of the DC power path 21 is connected to a power converter 4. A voltage meter 6 is attached to the DC power path 21. The voltage meter 6 measures a voltage of the electric power output from the fuel cell 1, and sends a measurement voltage to the controller 7.

The power converter 4 converts the DC power output from the fuel cell 1 into the AC power with a frequency equal to the frequency of the AC power of the power supply utility. One end of an AC power path 22 is connected to the power converter 4, while the other end of the AC power path 22 is connected to the power load. A power load meter 5 is attached to the AC power path 22. The power load meter 5 measures a demand amount of the power load and sends it to the controller 7.

The controller 7 is connected to the devices such as the hydrogen generator 2 and sensors (not shown) via signal wires, and transmits/receives the signals from /to the devices and the sensors, thereby controlling the devices in the fuel cell system 100. For example, the controller 7 decides target electric power to be generated in the fuel cell 1 based on the demand amount of the power load, and controls internal loads such as the power converter 4, the hydrogen generator 2 and the air supply device 3 so that the fuel cell 1 generates the target electric power. The controller 7 may be a single controller configured to perform centralized control, or may be a plurality of controllers configured to perform distributed control. The controller 7 may be any unit so long as it has a control function, and may be a microcomputer, a processor, a logic circuit, etc..

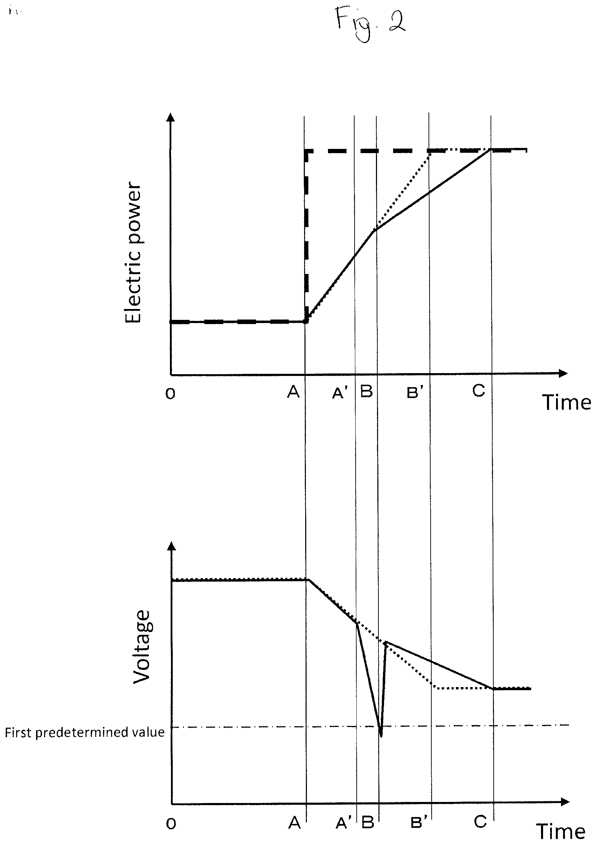

Next, the operation (operation method) of the above described fuel cell system 100 will be described. Fig. 2 is a graph schematically showing the electric power and the voltage which change with time, in the fuel cell system 100. In an upper graph, a vertical axis indicates the electric power output and the target electric power of the fuel cell 1. In the upper graph, a dotted line indicates the electric power output in a normal state, a solid line indicates the electric power output in an abnormal state, and a broken line indicates the target electric power. In a lower graph, a vertical axis indicates the voltage (measurement voltage) of the electric power output of the fuel cell 1 which is measured by the voltage meter 6, a dotted line indicates the voltage in the normal state, and a solid line indicates the voltage in the abnormal state. In the upper and lower graphs, a horizontal axis indicates time.

At start-up of the fuel cell system 100, the power converter 4 converts the AC power from the power supply utility into the DC power, which is supplied to the internal loads such as the hydrogen generator 2 and the air supply device 3. Thereby, the reactor and the steam generator 8 of the hydrogen generator 2 are heated by the burner of the heater 8 and the electric heater, to generate the steam and the reducing gas. This reducing gas and the air supplied from the air supply device 3 electrochemically react with each other, and thus the fuel cell 1 generates the electric power. The voltage meter 6 measures the voltage of the electric power output from the fuel cell 1, and sends this measurement value to the controller 7. In addition, the controller 7 causes the power load meter 5 to measure the electric power supplied to the power load, and decides the target electric power based on the power load demand amount. The controller 7 controls the supply amount of the hydrocarbon-based raw material to the hydrogen generator 2 and the supply amount of the reforming water to the hydrogen generator 2, an activation amount of the air supply device 3, etc. so that the reducing gas and the air with amounts required for generating the target electric power are supplied to the fuel cell 1.

When the power load demand amount is equal to or greater than a rated power output of the fuel cell system 100, the controller 7 causes the fuel cell system 100 to perform a power generation operation so that the target electric power is the rated power output, and the power converter 4 supplies this electric power output to the power load via the AC power path 22. At this time, the power supply utility connected to the AC power path 22 compensates for deficiency of the power load demand amount. On the other hand, when the power load demand amount is less than the rated power output of the fuel cell system 100, the controller 7 causes the fuel cell system 100 to perform a power generation operation so that the electric power output reaches the target electric power corresponding to the power load demand amount, and the power converter 4 supplies this electric power output to the power load.

During this power generation operation, when the power load demand amount is constant, the target electric power is constant as indicated by a broken line for time: 0-A in the upper graph of Fig. 2, while the measurement voltage does not substantially change as indicated by a solid line for time: 0-A in the lower graph of Fig. 2

When the power load demand amount increases at time: A in each graph of Fig. 2, the target electric power is set higher as indicated by a broken line in the upper graph in response to this. Accordingly, the controller 7 changes the electric power output of the fuel cell 1 such that it reaches the target electric power and controls the hydrogen generator 2 or the like so that the supply amount of the reducing gas corresponds to the target electric power. However, because of physical factors that the hydrocarbon-based raw material, the reducing gas and the oxidizing gas are supplied via the paths 11, 13, 15, respectively, the hydrogen generator 2 and the air supply device 3 cannot supply the gases with amounts corresponding to the change in the electric power output, upon the change having occurred. Or, because of chemical factors that a steam is generated in the steam generator 9 by heating, or the reducing gas is generated in the hydrogen generator 2 through the reforming reaction, the reducing gas with an amount corresponding to a change in the electric power output cannot be supplied to the fuel cell 1, upon the change having occurred. Considering a delay of a response to the change in the electric power output, which is unique to the fuel cell system 100, the electric power output is changed into the target electric power at a predetermined change rate, for example, 1W/second, as indicated by a dotted line for time: A-B' in the upper graph of Fig. 2. In this case, as indicated by a dotted line for time: A-B' in the lower graph of Fig. 2, the measurement voltage gradually decreases with a rate corresponding to the increase in the electric power output. When the electric power output reaches the target electric power and becomes constant at time: B' in the upper graph, the measurement voltage also becomes constant as indicated by the lower graph.

In contrast to the above, for example, due to a degradation of the fuel cell system 100 which progresses over years, the activity of the reforming catalyst of the hydrogen generator 2 is low, the hydrogen generation capability of the reducing gas is low, or the output capability of the air supply device 3 is low. In this case, a delay of a response of each device to the change in the electric power output is great. For this reason, the reducing gas or the oxidizing gas with a required amount corresponding to the change in the electric power output cannot be supplied to the fuel cell 1, so that the gases in the fuel cell 1 become insufficient.

Or, due to a use state or the like of the fuel cell system 100, a delay of a response of each device to the change in the electric power output is great. For example, if the fuel cell system 100 is operated with a minimum output for a long period, only a part of an evaporator (not shown) of the steam generator 9 is used, so that the surface of the evaporator becomes non-uniform. In this case, an evaporation amount of the steam generator 9 does not increase continuously according to an increase in the electric power output, and thereby a generation amount of the reducing gas in the hydrogen generator 2 cannot follow up the increase in the electric power output. As a result, the reducing gas becomes insufficient in the fuel cell 1 for a certain time.

In such a gas-insufficient state, the output voltage of the fuel cell 1 does not decrease gradually with a constant rate according to the increase in the electric power output but decreases rapidly. For this reason, the controller 7 monitors the output voltage of the fuel cell 1 based on the measurement voltage obtained by the voltage meter 6.

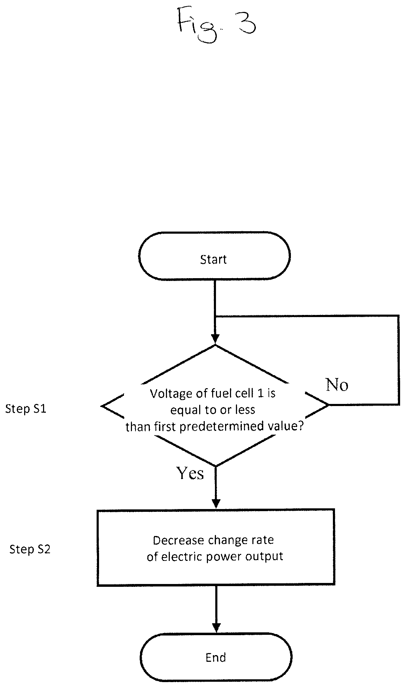

Fig. 3 is a flowchart showing an exemplary operation of the fuel cell system 100. As shown in Fig. 3, for a period from when the electric power output starts to change until it reaches the target electric power, the controller 7 determines whether or not the measurement voltage has reached a first predetermined value (e.g., 85% of a normal voltage of a rated power output) (step S1). When the insufficiency of the gases occurs at time: A' in the lower graph of Fig. 2, the measurement voltage decreases as indicated by the solid line. When the measurement voltage reaches the first predetermined voltage at time: B in the lower graph of Fig. 2 (step S1: YES), the controller 7 decreases the change rate of the electric power output from, for example, 1W/second to 0.7 second as indicated by the solid line in the upper graph of Fig. 2 (step S2). This reduces the amounts of the gases required for the electric power output. Therefore, the insufficiency of the gases can be resolved, and the fuel cell 1 can generate electric power stably. Because of this, as indicated by the lower graph, the measurement voltage is restored, and thereafter gradually decreases as the electric power output increases. Then, the electric power output reaches the target electric power at time: C in the upper graph, and thereafter the measurement voltage becomes constant as indicated by the lower graph.

As described above, in the case where the output voltage of the fuel cell 1 which is measured by the voltage meter 6 decreases to the first predetermined value, the controller 7 decreases the change rate of the electric power output to 0.7W/second which is lower than 1W/second, which is the change rate of the electric power output before the output voltage decreases to the first predetermined value. In this way, even when the supply capabilities of the gases are low due to a degradation which progresses over years and a use state, and the supply amounts of the gasses cannot follow-up the rapid change in the electric power output, the operation of the fuel cell system 100 can continue. Therefore, it becomes possible to prevent unnecessary repetition of the shut-down and start-up of the fuel cell 1.

Also, even when the insufficiency of the gases occurs temporarily, the change rate of the electric power output is reduced, and thereby the amounts of the gases required in the fuel cell 1 are reduced. This can resolve the insufficiency of the gases. Therefore, it becomes possible to prevent a problem associated with the fuel cell 1 due to the insufficiency of the gases.

### (Modified example 1)

In a fuel cell system 100 according to modified example 1 of Embodiment 1, in a case where the measurement voltage decreases to the first predetermined value when the controller 7 changes the electric power output of the fuel cell 1, it stops the power generation in the fuel cell 1. When the controller 7 changes the electric power output of the fuel cell 1 in the power generation operation which is resumed after the shut-down, it sets the change rate of the electric power output lower than the change rate of the electric power output before the measurement voltage decreases to the first predetermined value (sets the absolute value of the change rate smaller).

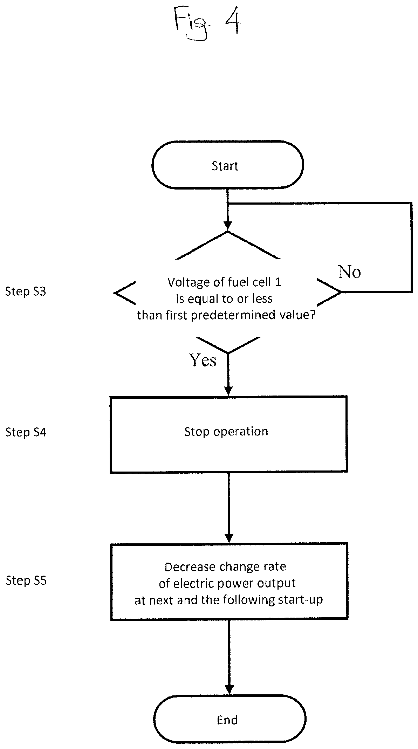

Specifically, Fig. 4 is a flowchart showing an exemplary operation of the fuel cell system 100 according to modified example 1. As shown in Fig. 4, when the measurement voltage reaches the first predetermined value for a period from when the electric power output starts to change until it reaches the target electric power (step S3: YES), the controller 7 shuts down the fuel cell 1, and stops the power generation operation of the fuel cell system 100 (step S4). After the shut-down, by re-start-up performed automatically or a user's request for the power generation, the fuel cell system 100 is started-up. When the target electric power is changed in response to the electric power demand amount of the external load in a state in which the fuel cell 1 is generating the electric power, the electric power output is changed so as to reach the target electric power. At this time, the change rate of the electric power output is lower than the change rate: 1 W/second, of the electric power output before the measurement voltage decreases to the first predetermined voltage, and is set to, for example, 0.7W/second (step S5). According to the set change rate of the electric power output, the controller 7 changes the electric power output of the fuel cell 1.

As described above, when the electric power output is changed during the next operation after the power generation operation of the fuel cell system 100 is stopped, its change rate is decreased. This makes it possible to avoid the problem associated with the insufficiency of the gases. Also, even when a phenomenon which is similar to that before the shut-down occurs during the power generation operation resumed after the shut-down, the insufficiency of the gases does not occur. As a result, the power generation operation in the fuel cell system 100 can be continued.

### (Modified example 2)

In a fuel cell system 100 according to modified example 2 of Embodiment 1, when the measurement voltage decreases to a second predetermined value which is smaller than the first predetermined value after the controller 7 decreases the change rate of the electric power output because the measurement voltage reached the first predetermined value, it stops the power generation in the fuel cell 1.

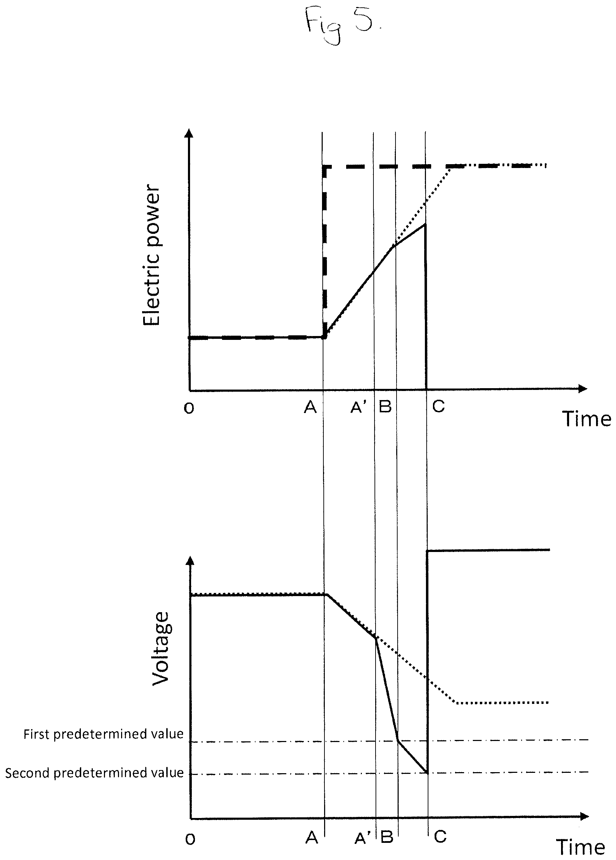

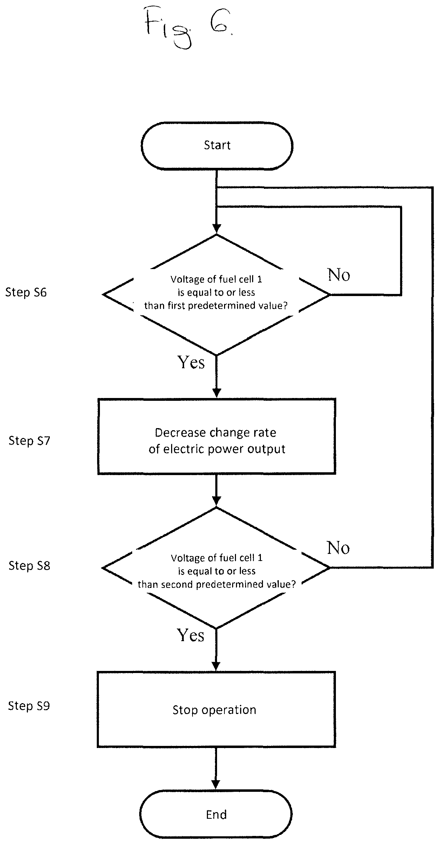

Specifically, Fig. 5 is a graph schematically showing electric power and a voltage which change with time, in the fuel cell system 100 according to modified example 2. In the upper graph, a vertical axis indicates the electric power output and target electric power of the fuel cell 1. In the upper graph, a dotted-line indicates the electric power output in a normal state, a solid line indicates the electric power output in an abnormal state, and a broken line indicates the target electric power. In the lower power graph, a vertical axis indicates the voltage (measurement voltage) of the electric power output of the fuel cell 1 which is measured by the voltage meter 6, a dotted line indicates the voltage in the normal state, and a solid line indicates the voltage in the abnormal state. In these graphs, a horizontal axis indicates time. Fig. 6 is a flowchart showing an exemplary operation of the fuel cell system 100.

As indicated by the broken line in the upper graph of Fig. 5, the target electric power changes according to a change in the electric power demand amount of the external load at time : A. Accordingly, considering a delay of a response to the change in the target electric power, which is unique to the fuel cell system 100, the electric power output is changed at a predetermined change rate, for example, 1 W/second, as indicated by the solid line. In this case, as indicated by the solid line for time A-A' in the lower graph, the measurement voltage gradually decreases according to an increase in the electric power output. However, when the gases become insufficient at time : A' in the lower graph, the measurement voltage drops rapidly. Then, when the measurement voltage reaches the first predetermined value at time : B in the lower graph (step S6: YES), the controller 7 decreases the change rate of the electric power output from, for example, 1W/second to 0.7 W/second as indicated by the solid line in the upper graph (step S7). This decreases the amounts of the gases required in the fuel cell 1, but the supply amounts of the gases are still insufficient even though the gases are decreased, and the insufficiency of the gases still continues. In this case, the measurement voltage continues to decrease to a second predetermined value (e.g., 75% of the normal voltage of the rated power output) at time C in the lower graph (step S8: YES). At this time, the controller 7 stops the power generation in the fuel cell 1, and stops the power generation operation of the fuel cell system 100 (step S9).

As described above, when the insufficiency of the gases is not resolved even after the change rate of the electric power output is decreased, the power generation in the fuel cell 1 is stopped. Thus, it becomes possible to prevent the problem associated with the fuel cell 1 due to the insufficiency of the gases.

In addition, the second predetermined value is set smaller than the first predetermined value. In this setting, an attempt is made to resolve the insufficiency of gases by decreasing the change rate of the electric power output, and then the power generation in the fuel cell 1 is stopped. Thus, it becomes possible to increases an occasion in which the power generation operation can be continued, and damages to the fuel cell 1 can be prevented.

### (Other modified examples)

In Embodiment 1 and modified examples of Embodiment 1, in a case where the measurement voltage decreases to the first predetermined value when the electric power output is changed, the controller 7 decreases the change rate of the electric power output. In contrast, in a case where the measurement voltage decreases and a decrease rate of the measurement voltage increases to a first predetermined rate when the electric power output is changed, the controller 7 may decrease the change rate of the electric power output.

In modified example 2 of Embodiment 1, in a case where the measurement voltage decreases to the second predetermined value which is smaller than the first predetermined value after the controller 7 decreases the change rate of the electric power output, the controller 7 stops the power generation in the fuel cell 1. Alternatively, in a case where the measurement voltage decreases to the first predetermined value and then the decrease rate of the measurement voltage increases to a second predetermined rate, after the controller 7 decreases the change rate of the electric power output, the controller 7 may stop the power generation in the fuel cell 1.

### (Embodiment 2)

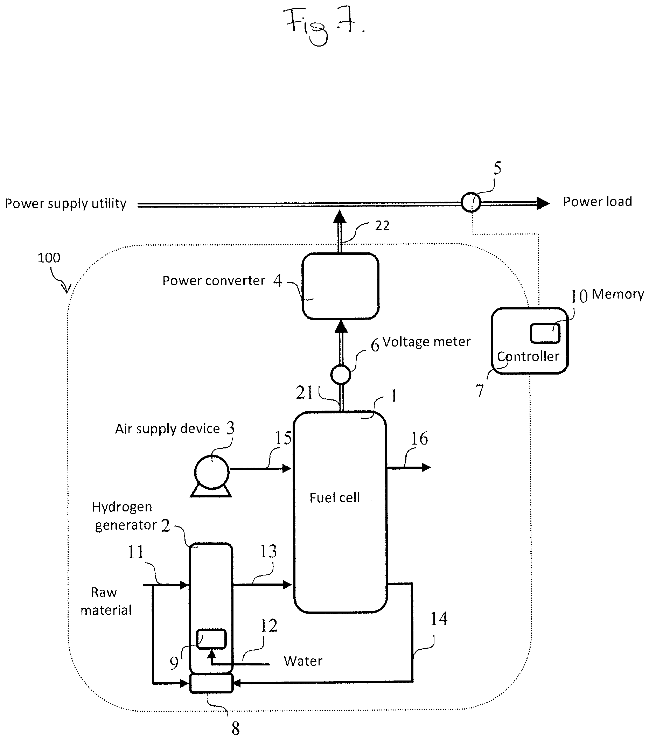

Fig. 7 is a block diagram showing a fuel cell system 100 according to Embodiment 2. As shown in Fig. 7, the fuel cell system 100 according to Embodiment 2 further comprises a memory 10 for storing the number of times the measurement voltage decreases to the first predetermined value, and the memory 10 is included in the controller 7. The memory 10 is configured to further store the relationship between the number of times the voltage decreases and the change rate of the output voltage, in addition to the number of times the measurement voltage decreases. This relationship is mathematical formulas and data base, representing a correspondence between the number of times the voltage decreases and the change rate of the output voltage. Based on this relationship, the controller 7 sets the change rate of the electric power output such that the change rate decreases with an increase in the number of times the measurement voltage decreases, which is stored in the memory 10.

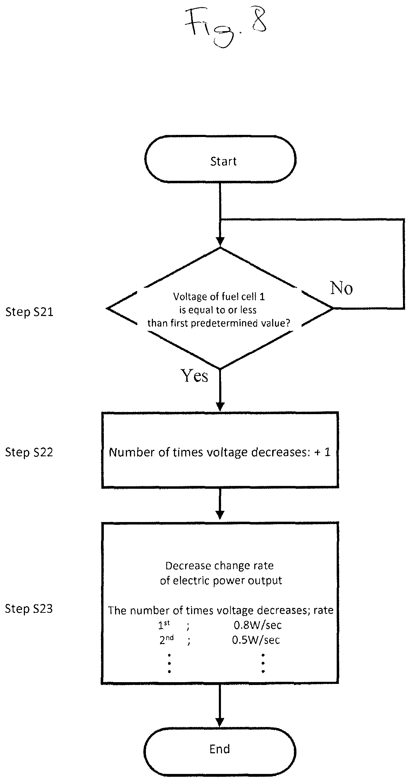

Next, the operation (operation method) of the above described fuel cell system 100 will be described. Fig. 8 is a flowchart showing an exemplary operation of the fuel cell system 100 of Fig. 5.

The controller 7 sets the target electric power according to a change in the electric power demand amount of the external load, and changes the electric power output of the fuel cell 1 so that the electric power output reaches the target electric power. When the electric power output is changed, the measurement voltage measured by the voltage meter 6 decreases according to this change. However, in some cases, this measurement voltage decreases rapidly due to the insufficiency of the gases, and the decrease rate increases. Because of this, the controller 7 monitors whether or not the measurement voltage reaches the first predetermined value in a period from when the electric power starts to change until the electric power output reaches the target electric power (step S21). When the measurement voltage reaches the first predetermined value (step S21: YES), the controller 7 adds "+1" to the number of times the measurement voltage decreases, which is already stored in the memory 10, and stores the resulting value in the memory 10 (step S22). When the number of times the measurement voltage decreases, is initially (at first time) stored in the memory 10, the number of times the measurement voltage decreases, which is already stored in the memory 10, is "0". Therefore, addition of "1" results in "1", with a decrease in the number of times the measurement voltage, which is stored in the memory 10.

The controller 7 derives the change rate of the electric power output, corresponding to the number of times the measurement voltage decreases, based on the relationship between the number of times the voltage decreases and the change rate of the output voltage, which are stored in the memory 10 (step S23). For example, when the number of times the measurement voltage decreases, is "1", the controller 7 decreases the change rate of the output voltage from 1.0W/second to 0.8W/second. According to the decreased change rate, the controller 7 changes the electric power output of the fuel cell 1 such that it reaches the target electric power. Under this state, the fuel cell 1 performs the power generation operation.

While the power generation operation continues or in the middle of the next and the following power generation operation which occurs after the shut-down, when the measurement voltage reaches the first predetermined value in a period from when the electric power output starts to change until the electric power output reaches the target electric power (step S21), the controller 7 adds "+1" to the number of times the measurement voltage decreases, which is already stored in the memory 10, and stores the resulting value in the memory 10 (step S22). If the number of times the measurement voltage decreases, is "2", the controller 7 decreases the change rate of the output voltage from 0.8W/second to 0.5 W/second, and continues the power generation operation at this change rate: 0.5 W/second (step S23).

As described above, since the controller 7 sets the change rate of the electric power output, lower, with an increase in the number of times the measurement voltage decreases to the first predetermined value. This makes it possible to continue the power generation operation even in a state in which a response delay increases.

In Embodiment 2, the controller 7 measures the number of times the measurement voltage decreases to the first predetermined value, in the operation performed once, from the start of the power generation in the fuel cell 1 until the shut-down, and sets the change rate of the electric power output so that the change rate is lower, with an increase in the number of times the measurement voltage decreases to the first predetermined value. Alternatively, the controller 7 may measure the number of times of the operation, in which the measurement voltage decreases to the first predetermined value, and set the change rate of the electric power output so that the change rate is lower with an increase in the number of times of the operation.

### (Modified example 3)

In a fuel cell system 100 according to Modified example 3 of Embodiment 2, the memory 10 is configured to store a period for which the voltage of the fuel cell 1 measured by the voltage meter 6 is equal to or greater than a third predetermined value (e.g., 90% of the normal voltage of the rated power output). In a case where time for which the measurement voltage is equal to or greater than the third predetermined value reaches a first predetermined period, after it decreases the change rate of the electric power, the controller 7 returns the change rate of the electric power output to the change rate before the measurement voltage decreases to the first predetermined value. The third predetermined value is greater than the first predetermined value.

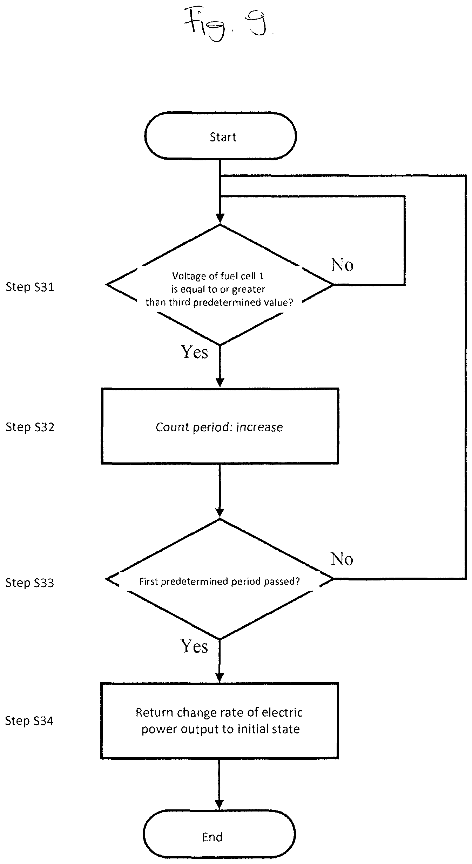

Specifically, Fig. 9 is a flowchart showing an exemplary operation of the fuel cell system 100. For example, when the insufficiency of the gases in the fuel cell 1 is resolved, after the change rate of the electric power output is decreased according to the flowchart of Fig. 8, the decreased electric power output increases. Therefore, as shown in Fig. 9, the controller 7 determines whether or not the measurement voltage is equal to or greater than the third predetermined value (step S31). The controller 7 measures the time for which the measurement voltage is equal to or greater than the third predetermined value, and stores the time in the memory 10 (step S32). When the time reaches the first predetermined period (e.g., 1 week) (step S33), the controller 7 determines that the insufficiency of the gases is resolved, returns the change rate of the electric power output in the fuel cell 1 to its initial rate (e.g., 1W/second), and continues the power generation operation (step S34). This initial rate is a predetermined rate, considering a delay of a response to a change in the target electric power, which is unique to the fuel cell system 100.

As described above, the controller 7 can determine that the insufficiency of the gases is resolved, when the period for which the power generation voltage (measurement voltage) in the fuel cell 1 is equal to or greater than the third predetermined value reaches the first predetermined period. By providing such an adequate verify period, it becomes possible to avoid a situation in which the insufficiency of the gases occurs again even after the change rate of the electric power output is returned to the initial rate. As a result, the power generation operation can continue stably.

In Modified example 3, the controller 7 decreases the change rate of the electric power output according to the flowchart of Fig. 8, and then executes processing according to the flowchart of Fig. 9. Alternatively, the controller 7 may decrease the change rate of the electric power output according to the flowchart of Fig. 3, 4, or 6, and then execute processing according to the flowchart of Fig. 9.

In Modified example 3, the controller 7 returns the change rate of the electric power output to the initial rate in step S34. Alternatively, the value of the returned change rate can be set to the decrease rate of the electric power output before the measurement voltage decreases to the first predetermined value. In brief, it is sufficient that the value of the returned change rate is greater than the change rate before the change rate is returned to the initial rate.

### (Modified example 4)

In a fuel cell system 100 according to Modified example 4 of Embodiment 2, the memory 10 is configured to store the number of times the measurement voltage is equal to or greater than the third predetermined value. In a case where the number of times the measurement voltage is equal to or greater than the third predetermined value reaches a predetermined number of times, after it decreases the change rate of the electric power output, the controller 7 returns the change rate of the electric power output to the change rate before the measurement voltage decreases to the first predetermined value. The third predetermined value is greater than the first predetermined value.

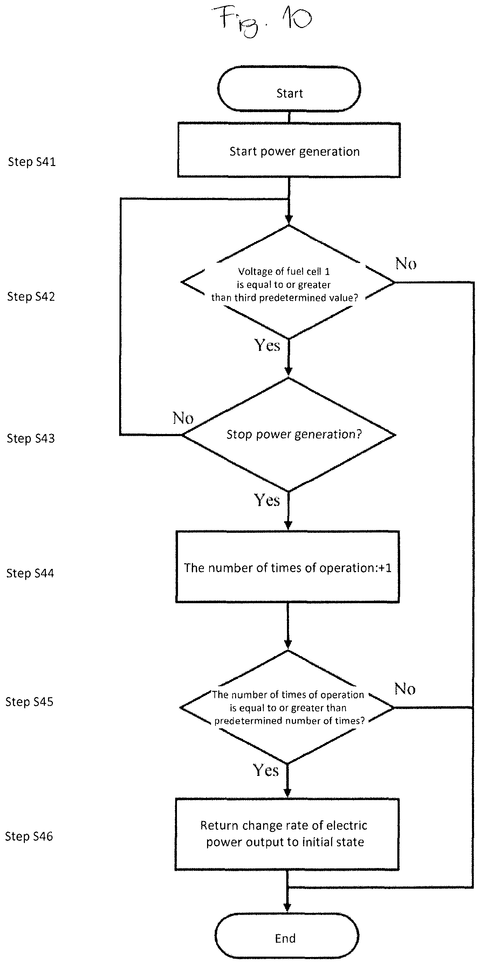

Specifically, Fig. 10 is a flowchart showing an exemplary operation of the fuel cell system 100. As shown in Fig. 10, the controller 7 starts the power generation in the fuel cell 1 (step S41). The controller 7 determines whether or not the power generation voltage (measurement voltage) of the fuel cell 1 which is measured by the voltage meter 6 has reached the third predetermined value (e.g., 90% of the normal voltage of the rated power output) (step S42). For example, in a case where the measurement voltage decreases to the first predetermined value due to the insufficiency of the gases when the electric power output of the fuel cell 1 is changed, the measurement voltage becomes less than the third predetermined value (step S42: NO). At this time, for example, in step S23 of Fig. 8, the controller 7 decides the change rate of the electric power output based on the relationship between the number of times the voltage decreases and the change rate, and decreases the change rate from the initial rate (e.g., 1 W/second). Thereafter, the change rate of the electric power output is set to a value which is smaller than the initial rate based on the flowchart of Fig. 8. At this time, the number of times the measurement voltage has reached the third predetermined value, which is stored in the memory 10, may be reset to "0".

Thus, when the supply amounts of the gases required for the power generation in the fuel cell 1 decrease and the insufficiency of the gases is resolved because the change rate of the electric power output is decreased, the measurement voltage is restored a value which is equal to or greater than the third predetermined value (step S42: YES). In this state, when the controller 7 stops the power generation in the fuel cell 1 (step S43: YES), it stores the number of times of the operation in which the measurement voltage has reached the third predetermined value (step S). At this time, the controller 7 adds "+1" to the number of times of the operation, which is already stored in the memory 10, and stores the resulting value in the memory 10.

When the controller 7 determines that the number of times of the operation, which is stored in the memory 10, is less than a predetermined number of times (e.g., three times) (step S45: NO), it maintains the change rate of the electric power output at a value which is smaller than the initial rate. On the other hand, when the controller 7 determines that the number of times of the operation is equal to or greater than the predetermined number of times (step S45: YES), it determines that the insufficiency of the gases is resolved, and returns the change rate of the electric power output in the fuel cell 1 to its initial rate (e.g., 1W/second) (step S46). Then, the controller 7 re-starts-up the fuel cell system 100 after the shut-down, and starts the power generation in the fuel cell 1 (step S41). At this time, the controller 7 changes the electric power output with the initial rate.

As described above, when the operation in which the power generation voltage of the fuel cell 1 reaches the third predetermined value or greater is performed predetermined number of times, the controller 7 determines that the insufficiency of the gases is resolved. Therefore, it becomes possible to lessen an occasion in which the power generation voltage of the fuel cell 1 decreases rapidly again even after the change rate of the electric power output is returned to the initial rate. As a result, the power generation operation of the fuel cell 1 can continue.

In addition, the third predetermined value which is a determination criterion used for increasing the change rate of the electric power output is set greater than the first predetermined value which is a determination criterion used for decreasing the change rate of the electric power output. For this reason, it is less likely that the power generation voltage in the fuel cell 1 decreases rapidly even when the change rate of the electric power output is increased. Therefore, it becomes possible to lessen unnecessary repetition of the shut-down and start-up of the fuel cell while preventing the problem associated with the decrease in the electric power output of the fuel cell 1.

In Modified example 4, the controller 7 decreases the change rate of the electric power output according to the flowchart of Fig. 8. Alternatively, for example, the controller 7 may decrease the change rate of the electric power output according to the flowchart of Fig. 3, 4, or 6.

In Modified example 4, the controller 7 returns the change rate of the electric power output to the initial rate in step S46. Alternatively, the value of the returned change rate can be set to the decrease rate of the electric power output before the measurement voltage decreases to the first predetermined value. In brief, it is sufficient that the value of the returned change rate is greater than the value of the change rate before the change rate of the electric power output is returned to the initial rate.

In addition, in Modified example 4, the controller 7 measures the number of times of the operation in which the measurement voltage has reached the third predetermined value, and returns the change rate of the electric power output to the initial rate at a time point when the number of times of the operation has reached the predetermined number of times. Alternatively, the controller 7 may measure the number of times the measurement voltage has reached the third predetermined value in the operation performed once, from the start of the power generation in the fuel cell 1 until the shut-down. In this case, the controller 7 returns the change rate of the electric power output to the initial rate at a time point when the measured number of times has reached the predetermined number of times.

### (Modified example 5)

In a fuel cell system 100 according to Modified example 5 of Embodiment 2, the controller 7 decreases the change rate of the electric power output and thereafter returns the change rate of the electric power output to the change rate of the electric power output before the measurement voltage decreases to the first predetermined value, in each second predetermined period. The memory 10 is configured to store time that passes from when the controller 7 decreases the change rate of the electric power output.

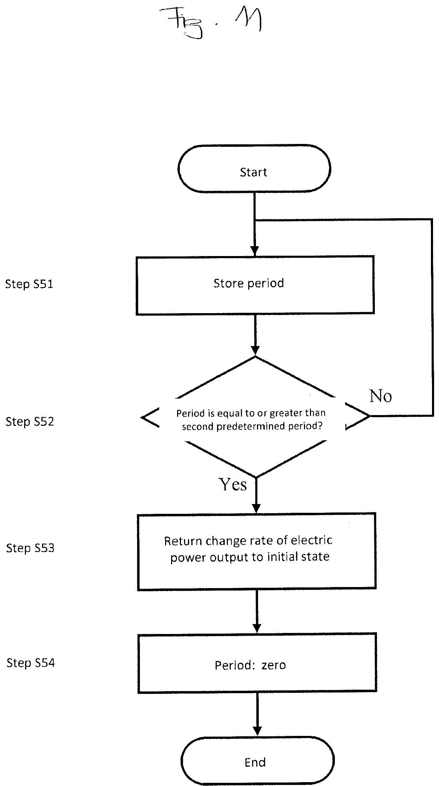

Specifically, Fig. 11 is a flowchart showing an exemplary operation of the fuel cell system 100. For example, when the insufficiency of the gases in the fuel cell 1 is resolved, after the change rate of the electric power output decreases according to the flowchart of Fig. 8, the decreased electric power output increases. Therefore, as shown in Fig. 11, the controller 7 measures a period from a specified time point, and stores this period in the memory 10 (step S51). The specified time point is, for example, a time point when supply of a current to the fuel cell system 100 starts, a time point when the power generation in the fuel cell 1 starts, a time point when the electric power output is changed, a time point when the change rate of the electric power output is decreased, a time point when the measurement voltage has decreased to the first predetermined value, etc..

The controller 7 determines whether or not the period has reached a second predetermined period (e.g., 1 week) (step S52). When the controller 7 determines that the period has reached the second predetermined period (step S52: YES), it determines that the insufficiency of the gases is resolved, returns the change rate of the electric power output of the fuel cell 1 to its initial rate (e.g., 1W/second) (step S53), resets the period in the memory 10 to zero (step S54), and continues the power generation operation. The initial rate is the decrease rate of the electric power output before the measurement voltage decreases to the first predetermined value.

As described above, when the period from the specified time point has reached the second predetermined period, the controller 7 can determine that the insufficiency of the gases is resolved. By providing such an adequate verify period, it becomes possible to avoid a situation in which the problem such as the insufficiency of the gases occurs again even after the change rate of the electric power output is returned to the initial rate without executing a complicated determination process. As a result, the power generation operation can continues stably.

In Modified example 5, the controller 7 decreases the change rate of the electric power output according to the flowchart of Fig. 8, and then executes processing according to the flowchart of Fig. 11. Alternatively, the controller 7 may decrease the change rate of the electric power output according to the flowchart of Fig. 3, 4, or 6, and then execute processing according to the flowchart of Fig. 11.

In Modified example 5, the controller 7 returns the change rate of the electric power output to the initial rate in step S53. Alternatively, the value of the returned change rate can be set to the decrease rate of the electric power output before the measurement voltage decreases to the first predetermined value. In brief, it is sufficient that the value of the returned change rate is greater than the change rate before the change rate of the electric power output is returned to the initial rate.

### (Other modified example)

In Embodiment 2 and modified examples of Embodiment 2, as in the cases of Embodiment 1, in a case where the measurement voltage decreases and the decrease rate of the measurement voltage decreases to a first predetermined rate when the electric power output is changed, the controller 7 may decrease the change rate of the electric power output. In another case where the measurement voltage decreases to the first predetermined rate and the decrease rate of the measurement voltage increases to a second predetermined rate, after it decreases the change rate of the electric power output, the controller 7 may stop the power generation in the fuel cell 1.

In Embodiment 2 and modified examples of Embodiment 2, the controller 7 returns the change rate of the decreased electric power output to the initial rate based on the time when the measurement voltage becomes equal to or greater than the third predetermined value or the number of times the measurement voltage becomes equal to or greater than the third predetermined value. Alternatively, the controller 7 may return the change rate of the decreased electric power output to the initial rate based on the time when the increase rate of the measurement voltage has reached a third predetermined rate or the number of times the increase rate of the measurement voltage has reached the third predetermined rate.

The above embodiments may be combined so long as they do not exclude each other.

### Industrial Applicability

A fuel cell system of the present invention is useful as a fuel cell system and an operation method thereof, which can lessen unnecessary repetition of shut-down and start-up of a fuel cell while preventing a problem associated with a change in the electric power output of the fuel cell.

### Reference Signs List

- 1: fuel cell
- 2: hydrogen generator
- 3: air supply device
- 4: power converter
- 5: power load meter
- 6: voltage meter
- 7: controller
- 8: heater
- 9: steam generator
- 10: memory
- 11: raw material gas supply path
- 12: reforming water supply path
- 13: reducing gas supply path
- 14: reducing gas discharge path
- 15: oxidizing gas supply path
- 16: oxidizing gas discharge path
- 21: DC power path
- 22: AC power path
- 100: fuel cell system

## Claims

1. A fuel cell system comprising:
a supply unit for supplying an oxidizing gas;
a hydrogen generator for generating a reducing gas containing hydrogen from a raw material gas;
a fuel cell for generating electric power through an electrochemical reaction between the reducing gas and the oxidizing gas;
a voltage meter for measuring a voltage of the fuel cell; and
a controller for controlling devices;
wherein
when the voltage measured by the voltage meter decreases to a first predetermined value by changing an electric power output of the fuel cell at a predetermined change rate,
the controller is configured to stop power generation in the fuel cell, and set the change rate of the electric power output lower than the predetermined change rate,
when the electric power output is changed during an operation of the power generation resumed after the power generation in the fuel cell is stopped.

2. A method of operating a fuel cell system including:
a supply unit for supplying an oxidizing gas;
a hydrogen generator for generating a reducing gas containing hydrogen from a raw material gas;
fuel cell for generating electric power through an electrochemical reaction between the reducing gas and the oxidizing gas;
a voltage meter for measuring a voltage of the fuel cell; and
a controller for controlling devices; the method comprising:
when the voltage measured by the voltage meter decreases to a first predetermined value by changing an electric power output of the fuel cell at a predetermined change rate,
stopping power generation in the fuel cell, and
setting the change rate of the electric power output lower than the predetermined change rate, when the electric power output is changed during an operation of the power generation resumed after the power generation in the fuel cell is stopped.

## Patentansprüche

1. Brennstoffzellen-System, das umfasst:
eine Zufuhr-Einheit zum Zuführen eines oxidierenden Gases;
eine Wasserstoff-Erzeugungseinrichtung zum Erzeugen eines reduzierenden Gases, das Wasserstoff enthält, aus einem Rohstoff-Gas;
eine Brennstoffzelle zum Erzeugen elektrischer Energie über eine elektrochemische Reaktion zwischen dem reduzierenden Gas und dem oxidierenden Gas;
eine Spannungsmesseinrichtung zum Messen einer Spannung der Brennstoffzelle; und
eine Steuerungsvorrichtung zum Steuern von Einrichtungen;
wobei
die Steuerungsvorrichtung so eingerichtet ist, dass sie
wenn sich die durch die Spannungsmesseinrichtung gemessene Spannung auf einen ersten vorgegebenen Wert verringert, indem eine Ausgabe elektrischer Energie der Brennstoffzelle mit einer vorgegebenen Änderungsrate geändert wird,
Stromerzeugung in der Brennstoffzelle unterbricht und die Änderungsrate der Ausgabe elektrischer Energie niedriger einstellt als die vorgegebene Änderungsrate, wenn die Ausgabe elektrischer Energie während eines wieder aufgenommenen Vorgangs der Stromerzeugung nach Unterbrechung der Stromerzeugung in der Brennstoffzelle geändert wird.

2. Verfahren zum Betreiben eines Brennstoffzellen-Systems, das enthält:
eine Zufuhr-Einheit zum Zuführen eines oxidierenden Gases;
eine Wasserstoff-Erzeugungseinrichtung zum Erzeugen eines reduzierenden Gases, das Wasserstoff enthält, aus einem Rohstoff-Gas;
eine Brennstoffzelle zum Erzeugen elektrischer Energie über eine elektrochemische Reaktion zwischen dem reduzierenden Gas und dem oxidierenden Gas;
eine Spannungsmesseinrichtung zum Messen einer Spannung der Brennstoffzelle; und
eine Steuerungsvorrichtung zum Steuern von Einrichtungen;
wobei das Verfahren umfasst:
wenn sich die durch die Spannungsmesseinrichtung gemessene Spannung auf einen ersten vorgegebenen Wert verringert, indem eine Ausgabe elektrischer Energie der Brennstoffzelle mit einer vorgegebenen Änderungsrate geändert wird,
Unterbrechen von Stromerzeugung in der Brennstoffzelle, und
Einstellen der Änderungsrate der Ausgabe elektrischer Energie niedriger als die vorgegebene Änderungsrate, wenn die Ausgabe elektrischer Energie während eines wieder aufgenommenen Vorgangs der Stromerzeugung nach Unterbrechung der Stromerzeugung in der Brennstoffzelle geändert wird.

## Revendications

1. Système à pile combustible comprenant:
une unité d'alimentation pour fournir un gaz oxydant:
un générateur d'hydrogène permettant de générer un gaz réducteur contenant de l'hydrogène à partir d'un gaz de matière première;
une pile à combustible permettant de générer de l'énergie électrique grâce à une réaction électrochimique entre le gaz réducteur et le gaz oxydant;
un compteur de tension permettant de mesurer une tension de la pile à combustible; et
un contrôleur permettant de commander des dispositifs;
dans lequel
lorsque la tension mesurée par le voltmètre redescend à une première valeur prédéterminée en changeant une puissance électrique de sortie de la pile à combustible à une vitesse de changement prédéterminée,
le contrôleur est configuré pour arrêter la production d'énergie dans la pile à combustible, et régler la vitesse de changement de la sortie d'énergie électrique sur une valeur inférieure à la vitesse de changement prédéterminée,
en cas de changement de puissance de sortie électrique pendant une opération de production de puissance après l'arrêt de la production de puissance dans la pile à combustible.

2. Procédé de fonctionnement d'un système de pile à combustible comprenant:
une unité d'alimentation pour fournir un gaz oxydant:
un générateur d'hydrogène permettant de générer un gaz réducteur contenant de l'hydrogène à partir d'un gaz de matière première;
une pile à combustible permettant de générer de l'énergie électrique grâce à une réaction électrochimique entre le gaz réducteur et le gaz oxydant; un compteur de tension permettant de mesurer une tension de la pile à combustible; et et un contrôleur permettant de commander des dispositifs; le procédé consistant à:
lorsque la tension mesurée par le voltmètre redescend à une première valeur prédéterminée en changeant une puissance électrique de sortie de la pile à combustible à une vitesse de changement prédéterminée,
arrêter la production d'énergie dans la pile à combustible, et
régler la vitesse de changement de la sortie d'énergie électrique sur une valeur inférieure à la vitesse de changement prédéterminée, en cas de changement de puissance de sortie électrique pendant une opération de production de puissance après l'arrêt de la production de puissance dans la pile à combustible.
